# EUROPEAN PATENT APPLICATION

(11) **EP 4 607 916 A1**
(43) Date of publication of application: **27.08.2025**
(21) Application number: 22963560.2
(22) Date of filing: 25.10.2022
(51) Int. Cl.: H04N 9/64, G06T 5/00, G06V 10/25, G06V 10/82, G06V 40/10, G06N 3/08

(54) **DISPLAY DEVICE AND OPERATION METHOD THEREOF**

(71) Applicant: LG Electronics Inc., Yeongdeungpo-gu Seoul 07336 (KR)
(72) Inventor: KIM, Hyomin, Seoul 06772 (KR); LEE, Chanho, Seoul 06772 (KR)
(74) Representative: Schornack, Oliver
(86) International application number: PCT/KR2022/016391
(87) International publication number: WO 2024/090599

(57) **Abstract**

The present disclosure is to maximize image quality improvement for a region of interest in an image. A display device according to an embodiment of the present disclosure may: extract a region of interest and a detail map from the entire region of an input image; extract one or more sub-maps from the extracted region of interest; generate a merged map by merging the detail map and the one or more sub-maps; generate a blended curve on the basis of a local mapping curve generated on the basis of local region information of each of multiple local regions configuring the entire region and a map gain of the generated merged map; and perform tone mapping of the input image on the basis of the generated blended curve.

## Description

### [Technical Field]

The present disclosure relates to a display device and a method for operating the same. The present disclosure relates to a display device and a method for operating the same that enhance the effect of dynamic tone mapping.

### [Background Art]

Digital images are generally composed of three channels of RGB, and Standard Dynamic Range (SDR) images can generally express brightness in the range of 0-255 (8 bits) for each channel.

However, since SDR images have a narrow range of brightness that can be expressed in each channel, there are many cases where dark regions are not properly expressed or bright regions are not properly expressed. For example, in images where there is a significant difference in brightness between dark and bright regions, such as a photo taken in backlight, the contrast balance is biased to one side. As a result, there can be a big difference between a scene seen with the naked eye and the SDR image that captured the scene.

In contrast to these SDR images, images that are expressed in 16 or 32 bits for each channel are referred to as High Dynamic Range (HDR) images, and HDR images have the advantage of being able to express images more realistically as they have a wider range of brightness expression capabilities.

However, since general display devices cannot express 16-bit or 32-bit gradation, 16-bit or 32-bit HDR images need to be converted into digital images with limited dynamic range.

Tone mapping is used in the process of converting an HDR image into an SDR image or an Low Dynamic Range (LDR) image, and can refer to a technology that compresses the brightness range of an HDR image into the brightness range of an SDR image or an LDR image while improving the contrast ratio.

### [Disclosure]

### [Technical Problem]

An object of the present disclosure is to maximize image quality improvement for a region of interest in an image.

An object of the present disclosure is to provide a display device and a method for operating the same that can further enhance the three-dimensionality and user immersion in a region of interest of an image.

### [Technical Solution]

A display device according to an embodiment of the present disclosure may extract a region of interest and a detail map from the entire region of an input image, extract one or more sub-maps from the extracted region of interest, merge the detail map and the one or more sub-maps to generate a merged map, generate a blended curve based on a local mapping curve generated based on map gain of the generated merged map and local region information of each of a plurality of local regions constituting the entire region, perform tone mapping of the input image based on the generated blended curve.

A method for operating a display device according to an embodiment of the present disclosure may include a step of extracting a region of interest and a detail map from an entire region of an input image; a step of extracting one or more sub-maps from the extracted region of interest;

a step of generating a merged map by merging the detail map and the one or more sub-maps; a step of generating a blended curve based on a local mapping curve generated based on map gain of the generated merged map and local region information of each of a plurality of local regions constituting the entire region; and a step of performing tone mapping of the input image based on the generated blended curve.

### [Advantageous Effect]

According to the display device and the method for operating the same according to the embodiment of the present disclosure, the contrast ratio in the region of interest of the image can be improved, and the three-dimensionality and user immersion of the image can be improved.

According to an embodiment of the present disclosure, tone mapping can be performed on a region of interest of a viewer for an HDR image to improve the image quality for the region of interest. Accordingly, the sense of presence and three-dimensionality of the HDR image can be maximized, and the image quality competitiveness can be greatly improved.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing the remote control device according to an embodiment of the present disclosure.
FIG. 5 is a flowchart illustrating a method for operating a display device according to an embodiment of the present disclosure.
FIG. 6 is a view illustrating an example of an HDR processed image according to an embodiment of the present disclosure.
FIG. 7 is a view explaining a detail map of the image illustrated in FIG. 6 according to an embodiment of the present disclosure.
FIG. 8 is a view illustrating application of local region gain adjustment according to detail map information, according to an embodiment of the present disclosure.
FIG. 9 is a view explaining changes in the curvature of a display device according to an embodiment of the present disclosure.
FIG. 10 is a view illustrating an example of a local contrast curve applied to a local region according to an embodiment of the present disclosure.
FIG. 11 is a view illustrating an example of a local contrast curve applied to each APL according to an embodiment of the present disclosure.
FIG. 12 is a view explaining a case where different sharpnesses are applied to the same APL according to an embodiment of the present disclosure.
FIG. 13 is a view explaining a local contrast curve for each APL according to a change in curvature and a case where different sharpnesses are applied to the same APL according to an embodiment of the present disclosure.
FIG. 14 is a flowchart for explaining a method for operating a display device according to another embodiment of the present disclosure.
FIG. 15 is a view illustrating a process of extracting a plurality of sub-maps for an object detected from an HDR image and obtaining a gain of a merged map from the plurality of extracted sub-maps according to one embodiment of the present disclosure.
FIG. 16 is a view illustrating a process of generating a blended curve by multiplying a local region contrast curve by a map gain according to one embodiment of the present disclosure.
FIGS. 17a and 17b are views illustrating a method for verifying whether an object is recognized and a map is applied to elements of the object to generate a tone mapping curve according to an embodiment of the present disclosure.
FIG. 18 is a view illustrating a process of generating an output image through tone mapping based on object recognition for an input HDR image according to an embodiment of the present disclosure.

### [Best Mode]

Hereinafter, embodiments related to the present disclosure will be described in more detail with reference to the drawings. The suffix "part" used for components in the following description is given or used interchangeably only for the convenience of writing the specification, and does not have a distinct meaning or role in itself.

Terms including ordinal numbers, such as first, second, or the like, may be used to describe various components, but the components are not limited by the terms. The terms are used only to distinguish one component from another.

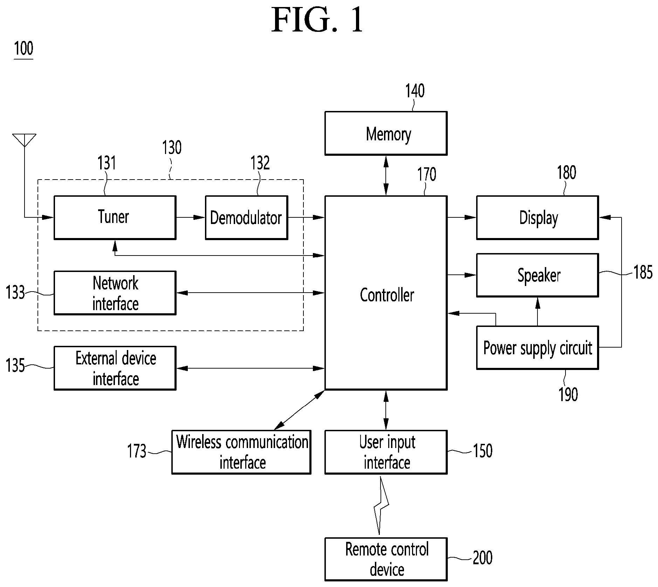

Hereinafter, the display device is described assuming a smart TV or the like that supports a broadcast reception function, but the display device may also include a smartphone or the like. In other words, the display device according to the embodiment of the present disclosure does not necessarily include the components illustrated in FIG. 1.

Fig. 1 is a block diagram illustrating a configuration of a display device according to an embodiment of the present disclosure.

Referring to FIG. 1, a display device 100 may include a broadcast reception module 130, an external device interface part 135, a storage part 140, a user input part 150, a control part 170, a wireless communication interface part 173, a display part 180, an audio output part 185, and a power supply part 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation part 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface part 133 may access a predetermined webpage through an accessed network or another network linked to the accessed network. In other words, the network interface part 133 may transmit or receive data to or from a corresponding server by accessing a predetermined webpage through the network.

The network interface part 133 may receive content or data provided from a content provider or a network operator. In other words, the network interface part 133 may receive content, such as movies, advertisements, games, VODs, and broadcast signals, which are provided from the content provider or the network operator, and information relating thereto through the network.

In addition, the network interface part 133 may receive firmware update information and update files provided from the network operator, and may transmit data to the Internet or content provider or the network operator.

The network interface 133 may select and receive a desired application among applications open to the air, through network.

The external device interface part 135 may receive an application or an application list in an adjacent external device and deliver the application or the application list to the control part 170 or the storage part 140.

The external device interface part 135 may provide a connection path between the display device 100 and an external device. The external device interface part 135 may receive at least one of an image or audio outputted from an external device that is wirelessly or wiredly connected to the display device 100 and deliver the received image or the audio to the controller. The external device interface part 135 may include a plurality of external input terminals. The plurality of external input terminals may include an RGB terminal, at least one High Definition Multimedia Interface (HDMI) terminal, and a component terminal.

An image signal of an external device inputted through the external device interface part 135 may be outputted through the display part 180. A sound signal of an external device inputted through the external device interface part 135 may be outputted through the audio output part 185.

An external device connectable to the external device interface part 135 may be one of a set-top box, a Blu-ray player, a DVD player, a game console, a sound bar, a smartphone, a PC, a USB Memory, and a home theater system but this is just exemplary.

Additionally, some content data stored in the display device 100 may be transmitted to a user or an electronic device, which is selected from other users or other electronic devices pre-registered in the display device 100.

The storage part 140 may store signal-processed image, voice, or data signals stored by a program in order for each signal processing and control in the control part 170.

In addition, the storage part 140 may perform a function for temporarily storing image, voice, or data signals output from the external device interface part 135 or the network interface part 133, and may store information on a predetermined image through a channel memory function.

The storage part 140 may store an application or an application list input from the external device interface part 135 or the network interface part 133.

The display device 100 may play content files (e.g., video files, still image files, music files, document files, application files, etc.) stored in the storage part 140, and may provide the content files to a user.

The user input part 150 may transmit signals input by a user to the control part 170, or may transmit signals from the control part 170 to a user. For example, the user input part 150 may receive or process control signals such as power on/off, channel selection, and screen setting from the remote control device 200 or transmit control signals from the control part 170 to the remote control device 200 according to various communication methods such as Bluetooth, Ultra Wideband (WB), ZigBee, Radio Frequency (RF), and IR communication methods.

In addition, the user input part 150 may transmit, to the control part 170, control signals input from local keys (not illustrated) such as a power key, a channel key, a volume key, and a setting key.

Image signals that are image-processed by the control part 170 may be input to the display part 180 and displayed as images corresponding to the image signals. In addition, image signals that are image-processed by the control part 170 may be input to an external output device through the external device interface part 135.

Voice signals processed by the control part 170 may be output to the audio output part 185. In addition, voice signals processed by the control part 170 may be input to the external output device through the external device interface part 135.

Additionally, the control part 170 may control overall operations of the display device 100.

In addition, the control part 170 may control the display device 100 by a user command or an internal program input through the user input part 150, and may access the network to download a desired application or application list into the display device 100.

The control part 170 may output channel information selected by a user together with the processed image or voice signals through the display part 180 or the audio output part 185.

In addition, the control part 170 may output image signals or voice signals of an external device such as a camera or a camcorder, which are input through the external device interface part 135, through the display part 180 or the audio output part 185, according to an external device image playback command received through the user input part 150.

Moreover, the control part 170 may control the display part 180 to display images, and may control the display part 180 to display broadcast images input through the tuner 131, external input images input through the external device interface part 135, images input through the network interface part, or images stored in the storage part 140. In this case, an image displayed on the display part 180 may be a still image or video and also may be a 2D image or a 3D image.

Additionally, the control part 170 may play content stored in the display device 100, received broadcast content, and external input content input from the outside, and the content may be in various formats such as broadcast images, external input images, audio files, still images, accessed web screens, and document files.

Moreover, the wireless communication part 173 may perform wired or wireless communication with an external device. The wireless communication part 173 may perform short-range communication with an external device. For this, the wireless communication part 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication part 173 may support wireless communication between the display device 100 and a wireless communication system, between the display device 100 and another display device 100, or between networks including the display device 100 and another display device 100 (or an external server) through wireless region networks. The wireless region networks may be wireless personal region networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication part 173 may detect (or recognize) a wearable device capable of communication around the display device 100. Furthermore, if the detected wearable device is a device authenticated to communicate with the display device 100, the control part 170 may transmit at least part of data processed in the display device 100 to the wearable device through the wireless communication part 173. Therefore, a user of the wearable device may use the data processed by the display device 100 through the wearable device.

The display part 180 may convert image signals, data signals, or on-screen display (OSD) signals, which are processed in the control part 170, or images signals or data signals, which are received in the external device interface part 135, into R, G, and B signals to generate driving signals.

Furthermore, the display device 100 illustrated in Fig. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface part 133 or the external device interface part 135 and play them without including the tuner 131 and the demodulation part 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display part 180 and the audio output part 185.

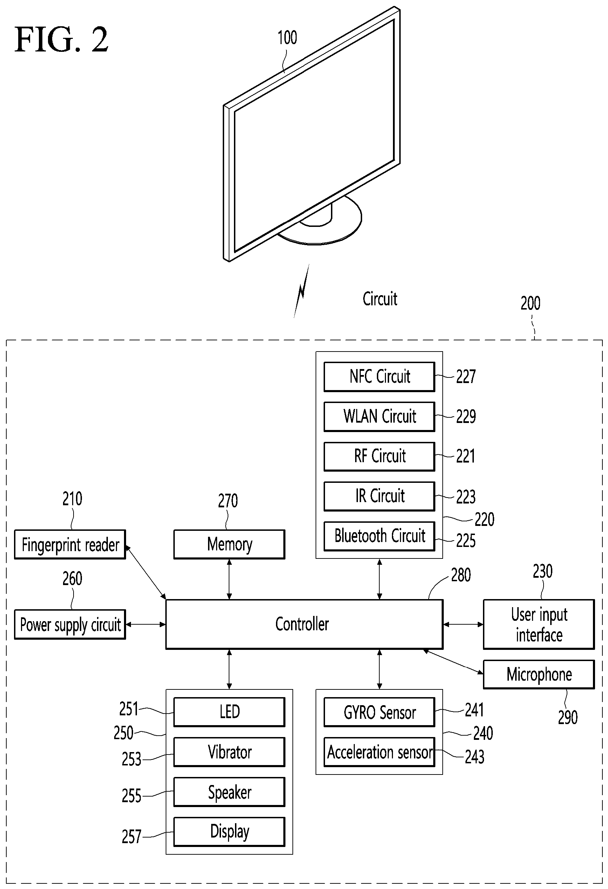

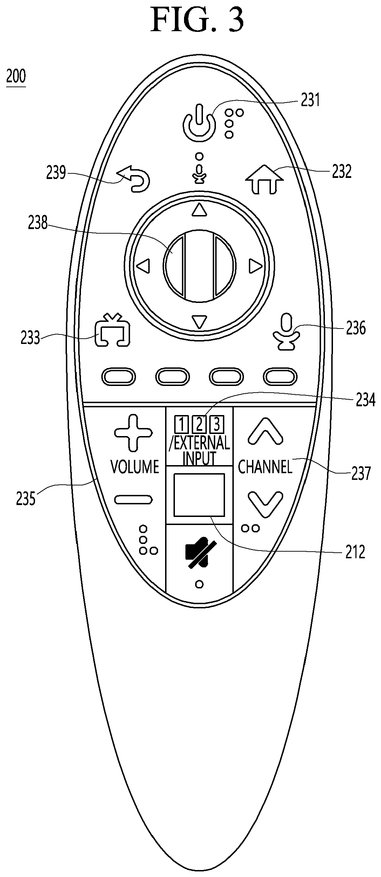

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition part 210, a wireless communication part 220, a user input part 230, a sensor part 240, an output part 250, a power supply part 260, a storage part 270, a control part 280, and a sound acquisition part 290.

Referring to Fig. 2, the wireless communication part 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication part 220.

Moreover, the remote control device 200 may receive signals transmitted from the display device 100 through the RF module 221 and if necessary, may transmit a command for power on/off, channel change, and volume change to the display device 100 through the IR module 223.

The user input part 230 may be configured with a keypad, a button, a touch pad, or a touch screen. A user may operate the user input part 230 to input a command relating to the display device 100 to the remote control device 200. If the user input part 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

Fig. 2 is described again.

If the user input part 230 includes a touch screen, a user may touch a soft key of the touch screen to input a command relating to the display device 100 to the remote control device 200. In addition, the user input part 230 may include various kinds of input interfaces operable by a user, for example, a scroll key and a jog key, and this embodiment does not limit the scope of the present disclosure.

The sensor part 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display part 180 of the display device 100.

The output part 250 may output image or voice signals in response to the operation of the user input part 230, or may output image or voice signals corresponding to signals transmitted from the display device 100. A user may recognize whether the user input part 230 is operated or the display device 100 is controlled through the output part 250.

For example, the output part 250 may include an LED module 251 for flashing, a vibration module 253 for generating vibration, a sound output module 255 for outputting sound, or a display module 257 for outputting an image, if the user input part 230 is manipulated or signals are transmitted/received to/from the display device 100 through the wireless communication part 220.

Additionally, the power supply part 260 supplies power to the remote control device 200 and if the remote control device 200 does not move for a predetermined time, stops the power supply, so that power waste may be reduced. The power supply part 260 may resume the supply of power if a predetermined key provided at the remote control device 200 is operated.

The storage part 270 may store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control part 280 of the remote control device 200 may store, in the storage part 270, information on a frequency band for transmitting/receiving signals to/from the display device 100 paired with the remote control device 200 and refer to it.

The control part 280 controls general matters relating to the control of the remote control device 200. The control part 280 may transmit a signal corresponding to a predetermined key operation of the user input part 230 or a signal corresponding to the movement of the remote control device 200 sensed by the sensor part 240 to the display device 100 through the wireless communication part 220.

In addition, the sound acquisition part 290 of the remote control device 200 may acquire voice.

The sound acquisition part 290 may include at least one microphone and acquire voice through the microphone.

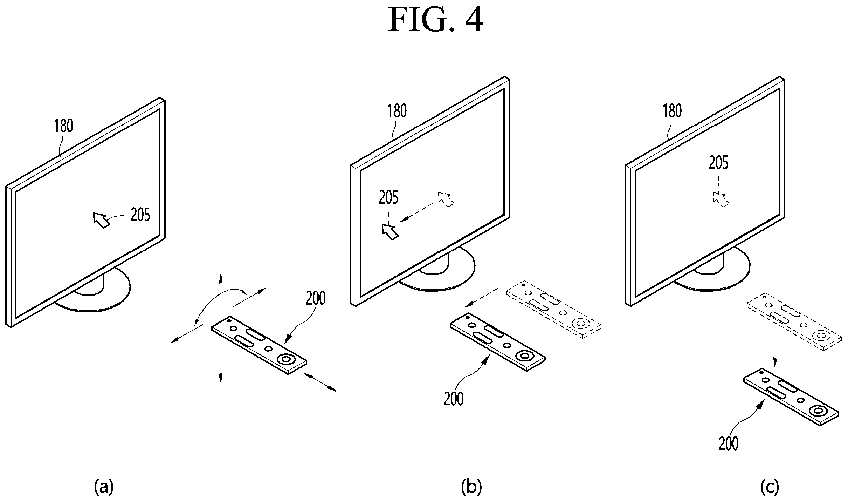

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display part 180.

A user may move or rotate the remote control device 200 vertically or horizontally. The pointer 205 displayed on the display part 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display part 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display part 180. Thus, a selected region in the display part 180 corresponding to the pointer 205 may be zoomed in and displayed in an enlarged size.

On the other hand, if a user moves the remote control device 200 close to the display part 180, a selection region in the display part 180 corresponding to the pointer 205 may be zoomed out and displayed in a reduced size.

On the other hand, if the remote control device 200 is moved away from the display part 180, a selection region may be zoomed out and if the remote control device 200 is moved closer to the display part 180, a selection region may be zoomed in.

Additionally, if a specific button in the remote control device 200 is pressed, recognition of a vertical or horizontal movement may be excluded. In other words, if the remote control device 200 is moved away from or closer to the display part 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display part 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display part 180 and also may be displayed in correspondence to a plurality of points such as a line and a surface.

A display device 100 according to an embodiment may include a control part 170 that performs tone mapping to adjust the brightness of input image data.

The display device 100 may include a display part 180 that displays an image according to output image data whose brightness is adjusted by tone mapping performed in the control part 170.

The control part 170 can generate a base mapping curve for the entire region from the input image data. The control part 170 can extract information for each local region of the entire region and generate a local mapping curve in which the information for each local region is reflected for each local region. The control part 170 can perform tone mapping for each local region using the local mapping curve in which the information for each local region is reflected. An image according to the output image data in which local mapping is performed for each local region by the control part 170 can be displayed on the display part 180.

The base mapping curve may include a dynamic contract curve for the entire region. The local mapping curve may include a local contrast curve for that local region.

The control part 170 can extract information for each local region of the entire region and generate an adaptive local contrast curve for each local region from the mapping curve of the entire region based on the extracted information for each local region. The control part 170 can perform tone mapping for each local region using the adaptive local contrast curve generated for each local region.

The display part 180 may be provided as a flat display part. The display part 180 may be provided as a curved display part having a curvature. The display part 180 may be provided as a bendable display part whose curvature changes.

In the case where the display part 180 is provided as a bendable display part, for example, a curvature change request signal of the display part 180 may be input from a user. For example, the curvature change request signal input from the user may be input through the user input interface part 150. The user input interface part 150 may transmit the input curvature change request signal of the display part 180 to the control part 170. The control part 170 may change the curvature of the display part 180 according to the curvature change request signal of the user.

As an example, a user can transmit a curvature change request signal of the display part 180 via a remote control device 200.

The display part 180 is provided to enable continuous curvature changes, and an arbitrary curvature can be selected to change the curvature. In addition, the display part 180 can also change the curvature by selecting any one of a plurality of predetermined curvature stages. For example, the curvature of the display part 180 can be implemented as a plane, a first curvature (1000R), a second curvature (800R), or the like.

According to the display device 100 according to the embodiment, for example, when a user presses a specific button of a remote control device 200, the curvature of the display part 180 can be implemented to sequentially change to a flat surface, a first curvature, a second curvature, or the like.

In addition, according to the display device 100 according to the embodiment, while the user is pressing a specific button of the remote control device 200, the curvature of the display part 180 may be continuously changed, and the curvature of the display part 180 at the time when the user stops pressing the specific button may be selected.

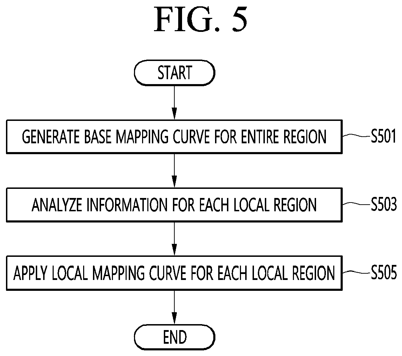

Hereinafter, the process of performing tone mapping in a display device according to an embodiment will be further examined with reference to FIG. 5.

FIG. 5 is a flowchart illustrating a method for operating a display device according to an embodiment of the present disclosure.

**The control part 170 can generate a base mapping curve for the entire region (S501).**

According to a method for operating a display device 100 according to an embodiment, a control part 170 can generate a base mapping curve for the entire region from input image data.

As an example, a base mapping curve can be generated through High Dynamic Range (HDR) processing of input image data.

The base mapping curve generated in the control part 170 may include a Dynamic Tone Mapping (DTM) curve and a Dynamic Contrast (DC) curve.

The control part 170 may receive metadata together with the image data when it receives the image data. The input image data may be an HDR image. The metadata may include information about the input image data. The metadata may include at least one of brightness information of the HDR image, maximum brightness information for each scene, and information for identifying the HDR image.

In addition, the control part 170 can calculate a luminance distribution histogram in the entire region of the input image data. The luminance distribution histogram of the HDR image can mean distribution information of brightness values of each pixel of the HDR image. The control part 170 can calculate a luminance distribution histogram, which is a distribution diagram for signal levels (e.g., 0 to 1023) of each pixel of the HDR image.

The control part 170 can generate a Dynamic Tone Mapping (DTM) curve based on luminance distribution histogram information for the input image data. The DTM curve can mean a mapping curve in the RGB domain. In the RGB domain, mapping can be performed from the input image data to the output image data according to the generated DTM curve.

The control part 170 can generate a Dynamic Contrast (DC) curve. The DC curve can mean a mapping curve in the luminance Y domain. In the luminance Y domain, mapping can be performed from input image data to output image data according to the generated DC curve.

Meanwhile, a method of generating a DTM curve and a DC curve in the control part 170 to generate output image data suitable for the characteristics of the display part 180 for the input image data is known, so a detailed description thereof will be omitted here.

Next, the control part 170 can analyze information for each local region (S503).

According to the method for operating a display device 100 according to the embodiment, the control part 170 can extract information for each local region of the entire region. The control part 170 can extract information for each local region constituting the entire region.

For example, information for each local region can be extracted from a detail map generated based on pixel information for the entire region. The detail map can include Average Picture Level (APL) information and sharpness information for each local region.

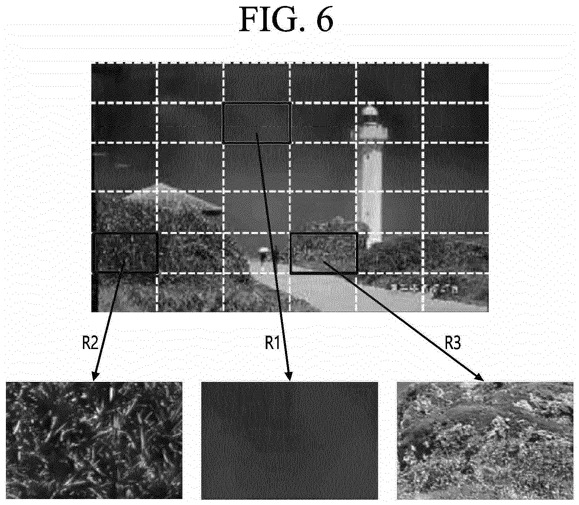

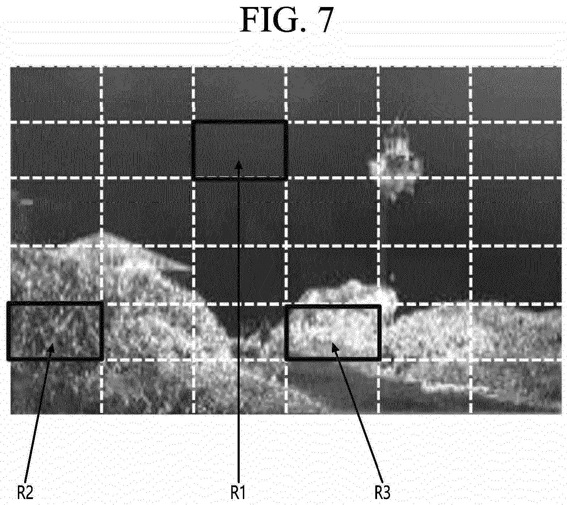

With reference to FIGS. 6 and 7, a detailed map according to an embodiment will be examined.

FIG. 6 is a view illustrating an example of an HDR processed image according to an embodiment of the present disclosure, and FIG. 7 is a view explaining a detail map of the image illustrated in FIG. 6 according to an embodiment of the present disclosure.

FIG. 6 illustrates an image processed with HDR according to an embodiment, wherein the entire region of the image can be divided into a plurality of local regions.

The plurality of local regions can be divided into an arbitrary number for the entire region considering the image processing speed and effect. For example, if the entire region of the image has a resolution of (1920*1080), the plurality of local regions can be provided in a number of (96*54). This is just an example, and the size and number of the plurality of local regions can be varied as needed.

Fig. 7 illustrates the detail degree of the entire region of the image illustrated in Fig. 6. The detail degree may be the amount of change in luminance value for adjacent pixels within a certain distance. The detail degree of each pixel may mean the step (or rate of change) between each pixel and adjacent pixels. A pixel with a large change in color or luminance compared to surrounding pixels may mean a pixel with a large detail degree.

For example, a detail map can be extracted by applying a Laplacian filter to the entire region. Detail maps can also be extracted using various other tools or in other ways.

Information for each local region can be extracted from a detail map generated based on pixel information for the entire region. The detail map can include Average Picture Level (APL) information and sharpness information for each local region.

APL information for each local region can mean the brightness level of each local region. Sharpness information for each local region can mean the detail level of each local region.

For example, the first region R1 illustrated in FIGS. 6 and 7 may be determined as a region with no change in detail level. The first region R1 illustrated in FIGS. 6 and 7 may be determined as a region with no sharpness.

In addition, the second region R2 and the third region R3 illustrated in FIGS. 6 and 7 can be determined as regions with changes in the level of detail. The second region R2 and the third region R3 illustrated in FIGS. 6 and 7 can be determined as regions with sharpness.

It can be seen that the first region R1, the second region R2, and the third region R3 illustrated in FIGS. 6 and 7 have different APL levels.

In this way, the control part 170 can extract APL information and sharpness information of each local region from the detail map.

Next, the control part 170 can apply a local mapping curve for each local region (S505).

Let us look at the process of generating a local mapping curve for each local region in the control part 170 of the display device 100 according to the embodiment and applying the generated local mapping curve to the tone mapping of the corresponding local region.

The display device 100 according to the embodiment of the present disclosure does not perform tone mapping using the same mapping curve for the entire region. The display device 100 according to the embodiment can generate a local mapping curve for each local region in which information of each local region is reflected, and perform tone mapping using the local mapping curve for each local region.

A display device 100 according to an embodiment can generate an adaptive local contrast curve for each local region based on extracted local region information and perform tone mapping for each local region.

The control part 170 can generate a local mapping curve for each local region, in which information for each local region is reflected. The control part 170 can generate a local mapping curve for each local region using APL information and sharpness information of each local region.

For example, each region of the first region R1, the second region R2, and the third region R3 has different APL levels and sharpness levels. In other words, each region has different APL values, and each region has different sharpness values. Accordingly, local mapping curves suitable for each region can be generated differently.

The control part 170 can generate a first local mapping curve for the first region R1 based on the APL information and the sharpness information of the first region. The control part 170 can generate a second local mapping curve for the second region R2 based on the APL information and the sharpness information of the second region. The control part 170 can generate a third local mapping curve for the third region R3 based on the APL information and the sharpness information of the third region.

For example, the first region R1 may be determined as a region where there is no change in the level of detail. In other words, the first region R1 may be determined as a region where there is no sharpness. The control part 170 may perform local tone mapping using a base mapping curve generated for the entire region without generating a separate first local mapping curve for the first region R1.

The second region R2 may be determined as a region where there is a change in the level of detail. In other words, the second region R2 may be determined as a region where there is sharpness. The control part 170 may generate a separate second local mapping curve for the second region R2 and perform local tone mapping for the second region R2 using the generated second local mapping curve.

For example, the control part 170 can generate a second local mapping curve that can enhance brightness and contrast for the second region R2. If the sharpness of the local region is high, the control part 170 can enhance brightness and contrast of the local region. The control part 170 can perform local tone mapping for the second region R2 by applying the second local mapping curve instead of the DC curve among the base mapping curves generated for the entire region.

The third region R3 may be determined as a region where there is a change in the level of detail. In other words, the third region R3 may be determined as a region where there is sharpness. The control part 170 may generate a separate third local mapping curve for the third region R3 and perform local tone mapping for the third region R3 using the generated third local mapping curve.

For example, the control part 170 can generate a third local mapping curve that can enhance brightness and contrast for the third region R3. If the sharpness of the local region is high, the control part 170 can enhance brightness and contrast of the local region. The control part 170 can perform local tone mapping for the third region R3 by applying the third local mapping curve instead of the DC curve among the base mapping curves generated for the entire region.

The control part 170 can perform tone mapping for each local region by using a local mapping curve that reflects information for each local region.

In an embodiment, a local mapping curve can be generated by additionally adjusting a contrast curve reflecting information for each local region to a base mapping curve generated for the entire region.

As an example, the local mapping curve for the first region R1 may include a DTM curve (applied to the RGB domain) of a base mapping curve generated for the entire region and a DC curve (applied to the luminance domain) of a base mapping curve generated for the entire region.

The local mapping curve for the second region R2 may include a DTM curve of a base mapping curve generated for the entire region (applied to the RGB domain) and a second local mapping curve generated for the second region (applied to the luminance domain).

The local mapping curve for the third region R3 may include a DTM curve of a base mapping curve generated for the entire region (applied to the RGB domain) and a third local mapping curve generated for the third region (applied to the luminance domain).

In this way, according to the display device and the driving method thereof according to the embodiment of the present disclosure, the contrast ratio in the local region can be improved by utilizing information of the local region of the image, and the three-dimensionality of the image and the user's sense of immersion can be improved.

According to the display device and the method for operating the same according to the embodiment of the present disclosure, the contrast ratio in the local region can be improved by utilizing the brightness and sharpness information of each local region of the image, and the three-dimensionality and user immersion of the image can be improved.

According to the display device and the method for operating the same according to the embodiment of the present disclosure, an adaptive local contrast curve is generated for each local region based on extracted local region information and tone mapping is performed, thereby improving the contrast ratio in the local region and enhancing the three-dimensionality of the image and user immersion.

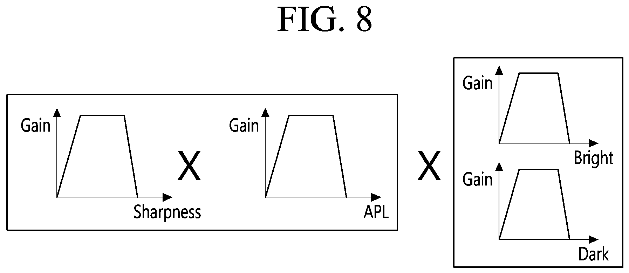

FIG. 8 is a view illustrating application of local region gain adjustment according to detail map information, according to an embodiment of the present disclosure.

The control part 170 of the display device 100 according to the embodiment can extract sharpness information and APL information of each local region from the detail map and determine the degree of brightness enhancement and the degree of contrast enhancement for the corresponding local region.

The control part 170 can use at least one of the sharpness information and APL information of each local region to determine the degree of brightness enhancement, the degree of contrast enhancement, or the like for the local region.

For example, as illustrated in Fig. 8, the control part 170 can extract the degree of brightness enhancement and/or the degree of contrast enhancement in each local region by calculating the gain according to the degree of sharpness in each local region and the gain according to the degree of APL. Through this process, the control part 170 can detect a local region of interest where brightness enhancement and/or contrast enhancement is to be processed.

In addition, the control part 170 can adjust the output gain compared to the input by calculating the gain for the brightness level and the gain for the darkness level for the gain of the detected local region of interest.

Through this process, the control part 170 can determine the degree of brightness enhancement and the degree of contrast enhancement for each local region from the sharpness information and APL information in each local region.

Meanwhile, the display device 100 according to the embodiment described above was described based on the case where the display part 180 is provided in a flat shape.

According to an embodiment, the display part 180 may be provided as a curved display part having a curvature. Additionally, the display part 180 may be provided as a bendable display part whose curvature changes.

The control part 180 according to the embodiment can generate a local mapping curve in which at least one of APL information, sharpness information, location information, and curvature information of each local region is reflected if the display part 180 is provided as a curved display part or a bendable display part, and perform tone mapping for each local region.

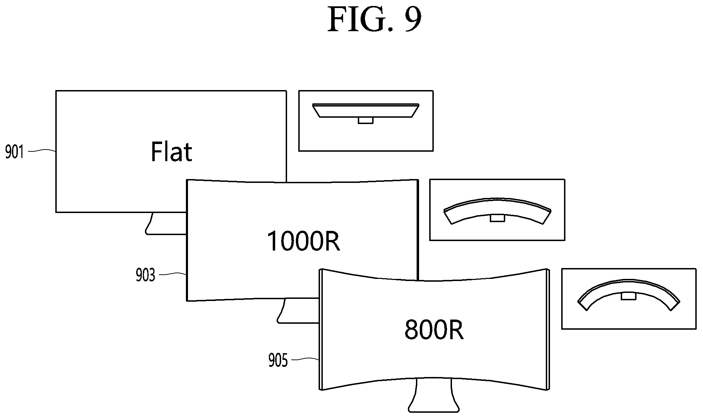

FIG. 9 is a view explaining changes in the curvature of a display device according to an embodiment of the present disclosure.

According to an embodiment, a local mapping curve can be generated by additionally adjusting a contrast curve that reflects at least one of APL information, sharpness information, position information, and curvature information of each local region to a base mapping curve generated for the entire region.

As an example, the display device 100 may be provided as a bendable display device with a changeable curvature, and may be in the form of a flat display part 901, a display part 903 having a first curvature 1000R, and a display part 905 having a second curvature 800R, and the curvature of the display part may be changed according to a user request.

When the display device 100 includes a flat display part 901, local mapping curves in the first region R1, the second region R2, and the third region R3 can be determined as described with reference to FIGS. 5 to 8.

When the display device 100 includes a display part 903 having a first curvature, the control part 170 can further enhance the brightness level for a first region R1 without sharpness compared to a case where the flat display part 901 is provided. The control part 170 can further enhance the brightness level and the contrast for a second region R2 with sharpness compared to a case where the flat display part 901 is provided. The control part 170 can further enhance the brightness level and the contrast for a third region R3 with sharpness compared to a case where the flat display part 901 is provided.

When provided with a display part 905 having a second curvature, the control part 170 can further enhance the brightness level for the first region R1 without sharpness compared to the case where the display part 903 having the first curvature is provided. The control part 170 can further enhance the brightness level and further enhance the contrast for the second region R2 with sharpness compared to the case where the display part 903 having the first curvature is provided. The control part 170 can further enhance the brightness level and further enhance the contrast for the third region R3 with sharpness compared to the case where the display part 903 having the first curvature is provided.

The control part 170 of the display device 100 according to the embodiment can enhance the brightness and contrast of the local region when the curvature of the local region is large.

The control part 170 of the display device 100 according to the embodiment can enhance brightness if the local region has curvature and the local region is located at the center of the entire region. The control part 170 can enhance contrast if the local region has curvature and the local region is located at the side of the entire region.

The control part 170 can generate a first local mapping curve for the first region R1 based on the APL information, sharpness information, location information, and curvature information of the first region. The control part 170 can generate a second local mapping curve for the second region R2 based on the APL information, sharpness information, location information, and curvature information of the second region. The control part 170 can generate a third local mapping curve for the third region R3 based on the APL information, sharpness information, location information, and curvature information of the third region.

The control part 170 can perform tone mapping for each local region by using a local mapping curve that reflects information for each local region.

In this way, according to the bendable display device and the method for operating the same according to the embodiment of the present disclosure, the contrast ratio in the local region can be improved by utilizing information of the local region of the image, and the three-dimensionality of the image and the user's immersion can be improved.

According to the bendable display device and the method for operating the same according to the embodiment of the present disclosure, the contrast ratio in the local region can be improved by utilizing the brightness and sharpness information of each local region of the image, and the three-dimensionality of the image and the user's sense of immersion can be improved.

According to the bendable display device and the method for operating the same according to the embodiment of the present disclosure, the contrast ratio in the local region can be improved by utilizing the brightness, sharpness information, and position information of the local region of the image, and the three-dimensionality of the image and the user's immersion can be improved.

According to the bendable display device and the method for operating the same according to the embodiment of the present disclosure, the three-dimensionality of the image and the user's immersion can be improved by utilizing the brightness, sharpness information, position information, and curvature information of the local region of the image.

According to the bendable display device and the method for operating the same according to the embodiment of the present disclosure, an adaptive local contrast curve is generated for each local region based on extracted local region information and tone mapping is performed, thereby improving the contrast ratio in the local region and enhancing the three-dimensionality of the image and user immersion.

In the case where the display part 180 is provided as a bendable display part, for example, a curvature change request signal of the display part 180 may be input from a user. For example, the curvature change request signal input from the user may be input through the user input interface part 150. The user input interface part 150 may transmit the input curvature change request signal of the display part 180 to the control part 170. The control part 170 may change the curvature of the display part 180 according to the curvature change request signal of the user. The control part 170 may adjust the local mapping curve of each local region according to the curvature of the display part 180.

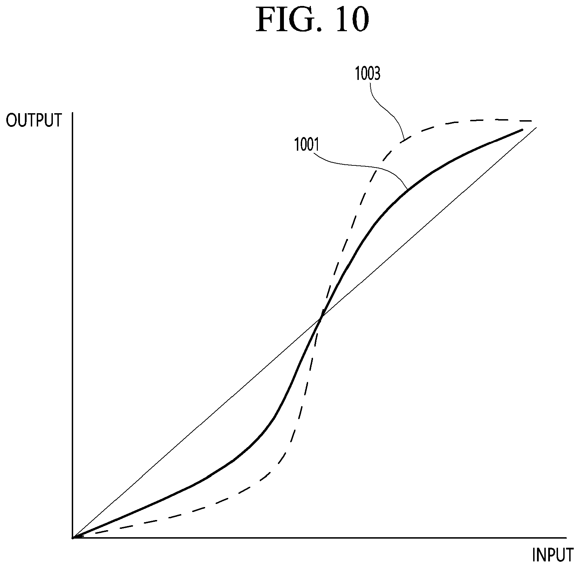

FIG. 10 is a view illustrating an example of a local contrast curve applied to a local region according to an embodiment of the present disclosure.

The control part 170 of the display device 100 according to the embodiment can extract local region information of the entire region and generate a local region contrast curve in which the local region information is reflected for each local region.

The local region contrast curve may refer to the first local mapping curve, the second local mapping curve, and the third local mapping curve described above.

The first curve 1001 illustrated in Fig. 10 may be a DC curve of a base mapping curve for the entire region. The second curve 1003 illustrates an example of a local region contrast curve.

The second curve 1003 may correspond to the first local mapping curve, the second local mapping curve, and the third local mapping curve described with reference to FIGS. 5 to 8. At this time, the second curve 1003 may have its contrast adjusted from a gain determined from APL information and sharpness information of the local region. The first local mapping curve, the second local mapping curve, and the third local mapping curve may be generated based on information of each local region, and may be generated as local contrast curves of different shapes.

In addition, the second curve 1003 may correspond to the first local mapping curve, the second local mapping curve, and the third local mapping curve described with reference to FIG. 9. At this time, the second curve 1003 may have its contrast adjusted from a gain determined from APL information, sharpness information, location information, and curvature information of the local region. The first local mapping curve, the second local mapping curve, and the third local mapping curve may be generated based on information of each local region, and may be generated as local contrast curves of different shapes.

Meanwhile, the control part 170 of the display device 100 according to the embodiment can set the maximum value of the second curve 1003. This is because, if the contrast is excessively enhanced, problems such as low-gradation buried and high-gradation saturation may occur. For example, if the second curve 1003 illustrated in FIG. 10 is a curve representing the maximum value set by the control part 170, the first, second, and third local mapping curves generated for each local region can be generated to have values between the first curve 1001 and the second curve 1003.

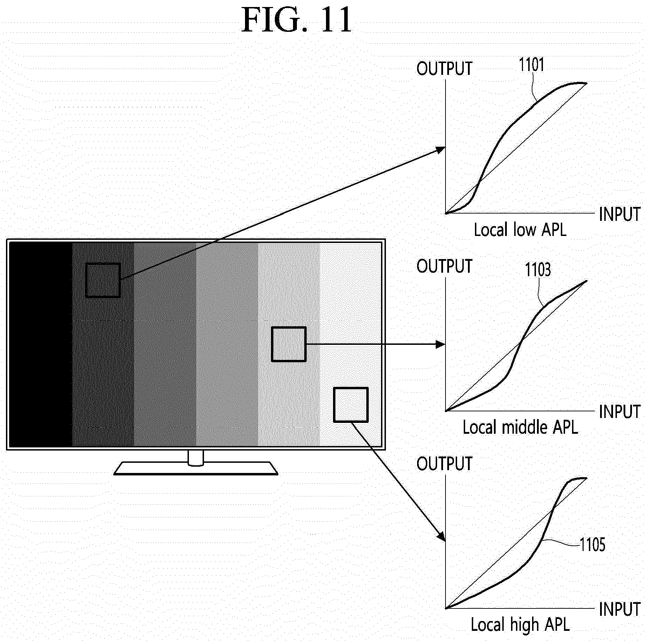

FIG. 11 is a view illustrating an example of a local contrast curve applied to each APL according to an embodiment of the present disclosure.

The control part 170 of the display device 100 according to the embodiment can generate different adaptive local contrast curves according to APL information of a local region.

For example, the control part 170 can cause the local contrast curve of the first curve 1101 to be generated when the APL degree of the local region has a relatively low value. The control part 170 can cause the local contrast curve of the second curve 1103 to be generated when the APL degree of the local region has a relatively medium value. The control part 170 can cause the local contrast curve of the third curve 1105 to be generated when the APL degree of the local region has a relatively high value.

For example, the second curve 1103 in which the APL degree of the local region has a relatively intermediate value may be set such that the APL value of a point where the ratio of the input value to the output value is 1 has a larger APL value than that of the first curve 1101. The second curve 1103 in which the APL degree of the local region has a relatively intermediate value may be set such that the APL value of a point where the ratio of the input value to the output value is 1 has a smaller APL value than that of the third curve 1105.

In this way, the control part 170 can adjust the shape of the local contrast curve of the local region according to the APL degree of the local region. By measuring the degree of change in the local contrast curve of the local region according to the change in the APL degree of the local region in the display device 100, it can be determined whether the adaptive local mapping curve concept proposed in the present disclosure has been applied. If there is a tendency for the local contrast curve to change according to the change in the APL degree of the local region, it can be determined that the adaptive local mapping curve concept proposed in the present disclosure has been applied.

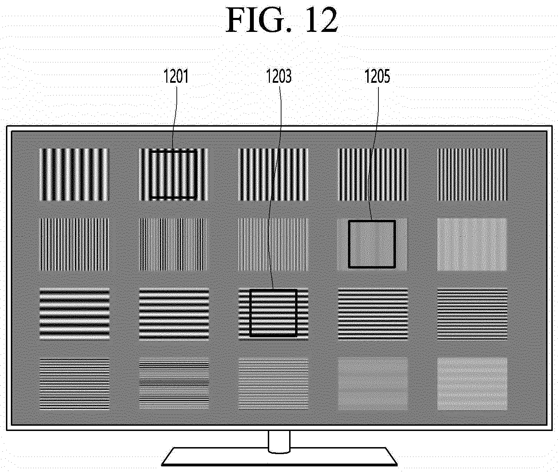

FIG. 12 is a view explaining a case where different sharpnesses are applied to the same APL according to an embodiment of the present disclosure.

The control part 170 of the display device 100 according to the embodiment can generate different adaptive local contrast curves according to sharpness information of a local region.

For example, the control part 170 can cause the local contrast to tend to be greater as the sharpness of the local region becomes stronger in local regions with the same APL degree. The control part 170 can generate a local contrast curve of the local region so that the bright region becomes brighter and the dark region becomes darker as the sharpness of the local region becomes stronger.

The control part 170 can generate local contrast curves having different contrast tendencies for different sharpnesses of the same APL.

The control part 170 can cause a local contrast curve having a relatively high contrast tendency to be generated for a first sharpness pattern 1201 having a relatively high sharpness value. The control part 170 can cause a local contrast curve having a relatively medium contrast tendency to be generated for a second sharpness pattern 1203 having a relatively medium sharpness value. The control part 170 can cause a local contrast curve having a relatively low contrast tendency to be generated for a third sharpness pattern 1205 having a relatively low sharpness value.

In this way, the control part 170 can adjust the shape of the adaptive local contrast curve according to the degree of sharpness of the local region. By detecting the degree of change in the local contrast through luminance measurement for the change in the degree of sharpness of the local region in the display device 100, it can be determined whether the concept of the adaptive local mapping curve proposed in the present disclosure has been applied. If there is a tendency for the local contrast to change through luminance measurement for the change in the degree of sharpness of the local region, it can be determined that the concept of the adaptive local mapping curve proposed in the present disclosure has been applied.

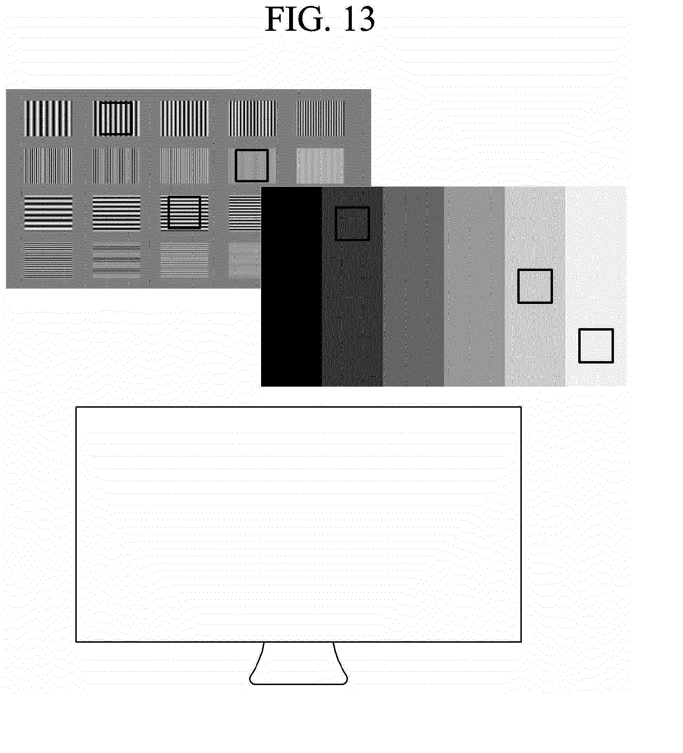

FIG. 13 is a view explaining a local contrast curve for each APL according to a change in curvature and a case where different sharpnesses are applied to the same APL according to an embodiment of the present disclosure.

The control part 170 according to the embodiment can generate different adaptive local contrast curves according to the curvature information of the local region. The control part 170 can generate different adaptive local contrast curves according to the curvature information of the local region and the APL information. The control part 170 can generate different adaptive local contrast curves according to the curvature information of the local region and the sharpness information. The control part 170 can generate different adaptive local contrast curves according to the curvature information, the APL information, and the sharpness information of the local region.

In this way, the control part 170 can adjust the shape of the local contrast curve of the local region according to the curvature information of the local region. By measuring the degree of change in the local contrast curve of the local region according to the degree of change in the curvature of the local region in the display device 100, it can be determined whether the adaptive local mapping curve concept proposed in the present disclosure has been applied. If there is a tendency for the local contrast curve to change according to the degree of change in the curvature of the local region, it can be determined that the adaptive local mapping curve concept proposed in the present disclosure has been applied.

The control part 170 can perform tone mapping for each local region by using an adaptive local mapping curve that reflects information for each local region.

An image according to output image data for which adaptive local tone mapping is performed for each local region in the control part 170 can be displayed on the display part 180.

According to the display device and the method for operating the same according to the embodiment of the present disclosure, the contrast ratio in the local region can be improved by utilizing information of the local region of the image, and the three-dimensional effect and user immersion of the image can be improved.

According to the display device and the method for operating the same according to the embodiment of the present disclosure, the contrast ratio in the local region can be improved by utilizing APL information, sharpness information, and location information of the local region of the image, and the three-dimensionality of the image and the user's sense of immersion can be improved.

According to the display device and the method for operating the same according to the embodiment of the present disclosure, the three-dimensional effect and user immersion of the image can be further improved by utilizing APL information, sharpness information, location information, and curvature information of a local region of the image.

According to the display device and the method for operating the same according to the embodiment of the present disclosure, adaptive local tone mapping can be performed for each local region based on information about each local region of the image, thereby further improving the three-dimensionality of the image and user immersion.

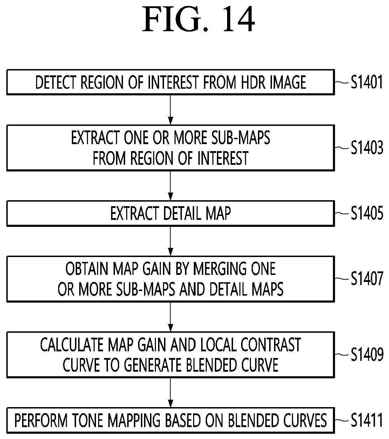

FIG. 14 is a flowchart for explaining a method for operating a display device according to another embodiment of the present disclosure.

**The control part 170 of the display device 100 detects a region of interest from an HDR image (S1401).**

The control part 170 can perform tone mapping based on a base mapping curve from an input HDR image and detect a region of interest from an image on which tone mapping has been performed.

The base mapping curve is replaced with the description in Fig. 5.

The control part 170 can detect one or more regions of interest from the HDR image. Each region of interest can be a region that includes an object.

In one embodiment, the control part 170 can detect an object using an object recognition model based on an artificial neural network learned through deep learning or machine learning. The artificial neural network can be either a Deep Neural Network (DNN) or a Convolution Neural Network (CNN).

An object can represent any of a person, an animal, or an inanimate object.

The object recognition model can be either a single-stage You Only Look Once (YOLO) model or a two-stage Faster Regions with Convolution Neural Networks (R-CNN) model.

You Only Look Once (YOLO) model is a model that can predict objects and their locations within an image at once.

The You Only Look Once (YOLO) model divides the original image into grids of the same size. Then, for each grid, the number of bounding boxes specified in a predefined shape centered around the center of the grid is predicted, and the confidence is calculated based on this.

After that, whether the image contains an object or is just a background is included, and the location with high object confidence is selected so that the object category can be identified.

Faster Regions with Convolution Neural Networks (R-CNN) model is explained. First, feature maps are extracted from images using the Convolution Neural Network (CNN) model. Based on the extracted feature maps, a plurality of regions of interest (RoI) are extracted. RoI pooling is performed for each region of interest.

RoI pooling is a process of extracting a feature map with a size of H x W by setting a grid to a predetermined size of H x W on which the region of interest is projected, and extracting the largest value for each cell included in the grid to extract a feature map with a size of H x W.

A feature vector is extracted from a feature map having the size of H x W, and object identification information can be obtained from the feature vector.

The object recognition model may be stored in the storage part 140.

The control part 170 can identify an object using an object recognition model and classify the object into a plurality of elements. The plurality of elements can include a head and a body if the object represents a person.

**The control part 170 obtains one or more sub-maps from the detected region of interest (S1403).**

Below, the map can contain RGB information about the image. The map can be generated through luminance values based on RGB data.

In one embodiment, if the detected region of interest includes an object representing a person, one or more sub-maps may include a head map corresponding to the head of the person and a body map corresponding to the body of the person.

A head map may be a map generated based on pixel information of a region where a person's head is located. The pixel information may include one or more of APL information and sharpness information.

A body map can be a map generated based on pixel information of a region where a person's body is located.

One or more of the sub-maps may further include a depth map. A depth map may be a map representing overall perspective.

A depth map can be a map that has different contrasts according to the location of the object. A depth map can illustrate a greater difference in contrast between objects that are close and objects that are far away.

**The control part 170 extracts a detail map from the HDR image (S1405).**

A detail map may be a map generated based on pixel information of the entire region of an HDR image.

In one embodiment, the detail map can be extracted by applying a Laplacian filter to the entire region. The detail map can also be extracted using various other tools or in other ways.

A detailed description of the detail map is replaced by the description in Fig. 7.

**The control part 170 obtains map gain by merging a plurality of sub-maps and detail maps (S1407).**

The control part 170 can generate a merged map by merging a plurality of sub-maps and detail maps. The control part 170 can calculate a map gain from the merged map.

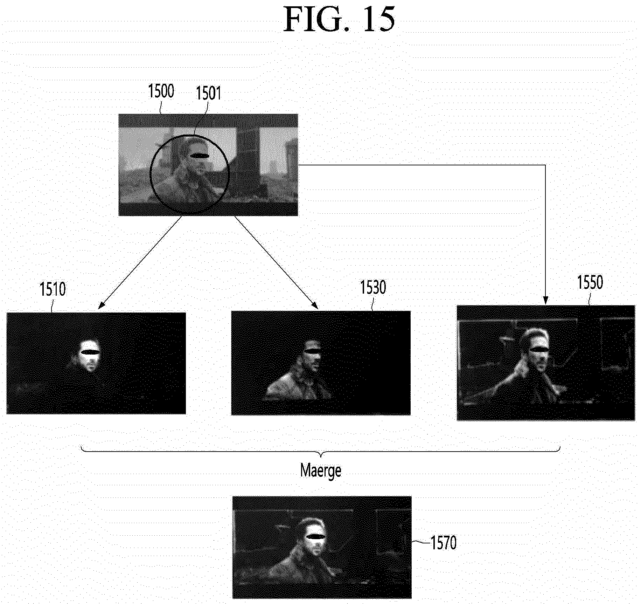

FIG. 15 is a view illustrating a process of extracting a plurality of sub-maps for an object detected from an HDR image and obtaining a gain of a merged map from the plurality of extracted sub-maps according to one embodiment of the present disclosure.

Referring to FIG. 15, an HDR image 1500 is illustrated.

The control part 170 can detect an object 1501 from an HDR image 1500 using an object recognition model.

The control part 170 can extract the head and body from the detected object 1501.

The control part 170 can generate a head map 1510 based on pixel information of the region where the extracted head is located.

The control part 170 can generate a body map 1530 based on pixel information of a region where the extracted body is located.

The control part 170 can generate a detail map 1550 from an HDR image 1500.

The control part 170 can merge the head map 1510, the body map 1530, and the detail map 1550 to generate a merged map 1570.

The control part 170 can calculate map gain from the merged map 1570.

Map gain can range from 1 to 2.

Map gain can be extracted for each pixel, and the closer the pixel is to white color, the closer the gain can be to 2, and the closer the pixel is to black color, the closer the gain can be to 1.

Again, FIG. 14 is explained.

**The control part 170 calculates the map gain and the local region contrast curve to generate a blended curve (S1409).**

The control part 170 can generate a blended curve by multiplying the map gain and the local region contrast curve for each image data level.

The control part 170 of the display device 100 can extract local region information of the entire region and generate a local region contrast curve in which the local region information is reflected for each local region.

The local region contrast curve may refer to the first local mapping curve, the second local mapping curve, and the third local mapping curve described above.

The control part 170 can divide the merged map into a plurality of local map regions and multiply the map gain of each local map region by a local region contrast curve to generate a blended curve.

The control part 170 can generate as many blended curves as there are local region contrast curves.

For example, assume that the entire region of an HDR image is divided into three local regions.

The control part 170 can generate a first blended curve by multiplying a first local mapping curve corresponding to a first local region and a first map gain corresponding to the first local region.

The control part 170 can generate a second blended curve by multiplying a second local mapping curve corresponding to the second local region and a second map gain corresponding to the second local region.

The control part 170 can generate a third blended curve by multiplying a third local mapping curve corresponding to a third local region and a third map gain corresponding to the third local region.

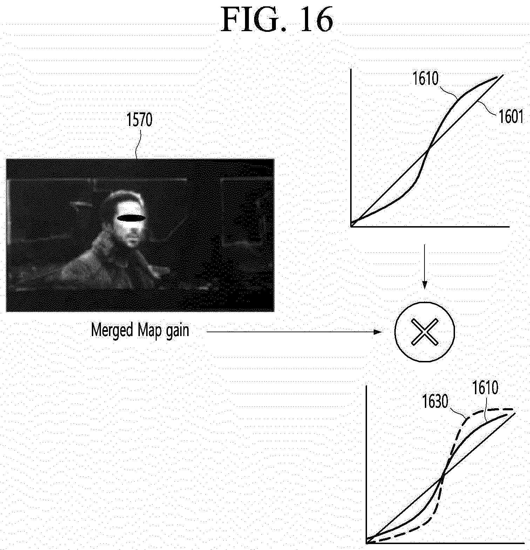

FIG. 16 is a view illustrating a process of generating a blended curve by multiplying a local region contrast curve by a map gain according to one embodiment of the present disclosure.

Referring to FIG. 16, a local region contrast curve 1610 generated by reflecting local region information from a base mapping curve 1601 is illustrated.

The local region contrast curve 1610 may be a curve obtained based on information of a local region constituting the entire region according to the embodiment of FIG. 5.

The control part 170 can generate a blended curve 1630 by multiplying the gain of the merged map 1570 generated based on the head map, body map, depth map, and detail map and the local region contrast curve.

According to the blended curve 1630, the contrast ratio of the region of interest of the HDR image can be maximized, greatly improving the sense of presence and three-dimensionality.

Again, FIG. 14 is explained.

**The control part 170 performs tone mapping for HDR images based on blended curves (S1411).**

The control part 170 can output image data by tone mapping data for the input HDR image according to a blending curve.

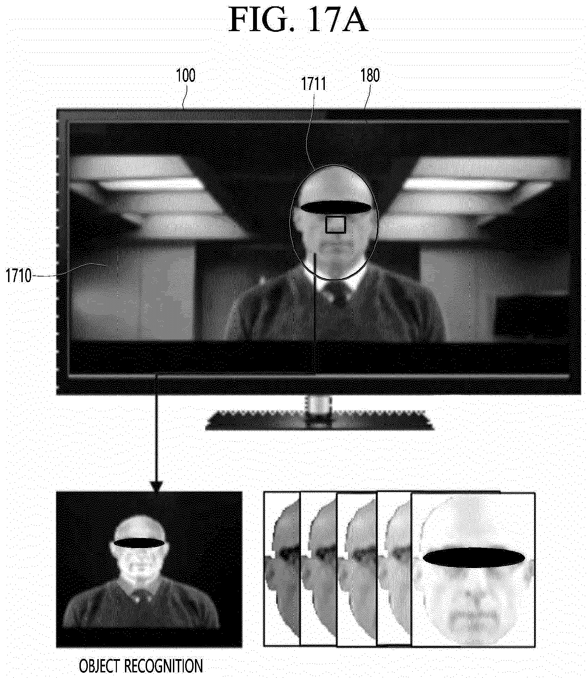

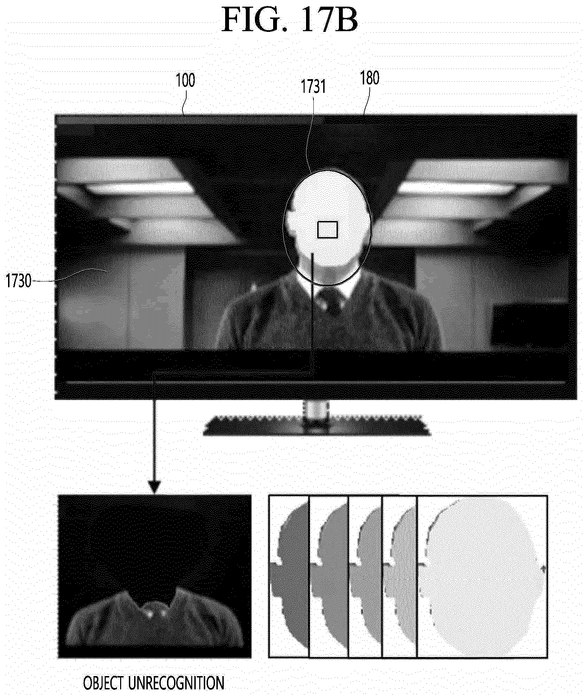

FIGS. 17a and 17b are views illustrating a method for verifying whether an object is recognized and a map is applied to elements of the object to generate a tone mapping curve according to an embodiment of the present disclosure.

Referring to FIG. 17a, the display device 100 displays a first HDR image 1710 including a face image 1711 of a person to be recognized as an object on the display part 180.

FIG. 17b illustrates a display device 100 displaying a second HDR image 1730 including a background image 1731 that is not recognized as an object on the display part 180.

The first HDR image 1710 and the second HDR image 1730 are identical except for the face image 1711 and the background image 1731.

The positions of the face image 1711 and the background image 1731 are identical.

In a case where an object is recognized from an HDR image according to an embodiment of the present disclosure, a blended curve is generated using a map of elements constituting the recognized object, and tone mapping is performed according to the generated blended curve, the luminance for the face image 1711 and the luminance for the background image 1731 are different from each other.

This is because the luminance measured by the blended curve when the object referred to as the face image 1711 is recognized and the luminance measured by the local region contrast curve when the object is not recognized are different from each other.

Conversely, if the embodiment of the present disclosure is not applied, there is no process of recognizing an object, and tone mapping is performed according to a local region contrast curve, the luminance for the face image 1711 and the luminance for the background image 1731 are identical to each other.

This is because tone mapping was performed according to the local region contrast curve without applying the object map (merged map) according to object recognition to both the face image 1711 and the background image 1731.

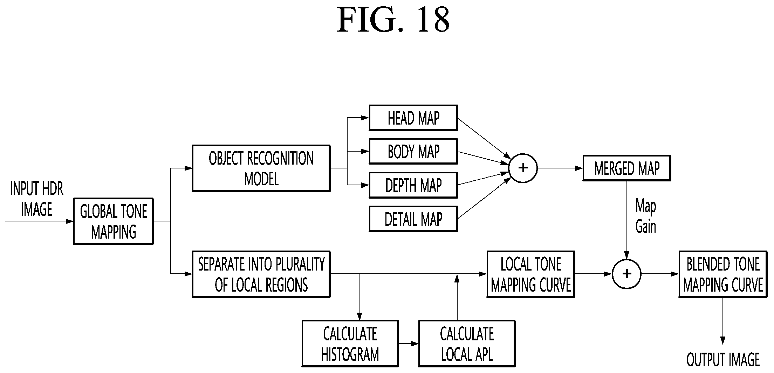

FIG. 18 is a view illustrating a process of generating an output image through tone mapping based on object recognition for an input HDR image according to an embodiment of the present disclosure.

The processes of FIG. 18 may be performed by a control part including one or more processors.

The control part 170 can perform global tone mapping for the entire region of the input HDR image.

The control part 170 can perform global tone mapping using a base mapping curve for an input HDR image.

The base mapping curve may include a dynamic tone mapping curve (DTM curve) and a dynamic contrast curve (DC curve) as described in FIG. 5.

The control part 170 can receive metadata of the HDR image together with the HDR image. The metadata of the HDR image can include at least one of brightness information of the HDR image, maximum brightness information for each scene, and information for identifying the HDR image.

The control part 170 can extract an object using an object recognition model after performing global tone mapping, and can separate the extracted object into a head region and a body region.

The control part 170 can generate a head map for the head region, a body map for the body region, a depth map and a detail map for the entire region, and merge the generated head map, body map, depth map and detail map to generate a merged map.

The control part 170 can calculate the map gain for the merged map.

Meanwhile, the control part 170 can generate a local tone mapping curve to be calculated in the map gain.

The control part 170 can divide the HDR image into a plurality of local regions.

When the entire region of the HDR image has a resolution of (1920*1080), a plurality of local regions can be provided in a number of (96*54). The control part 170 can calculate a luminance distribution histogram representing the luminance distribution for each local region.

A luminance distribution histogram can mean distribution information of the brightness values of each pixel that constitutes each local region.

The control part 170 can calculate a luminance distribution histogram, which is a distribution diagram for the signal level (e.g., 0 to 1023) of each pixel in each local region of the HDR image.

The control part 170 can calculate local APL for a local region using a luminance distribution histogram.

The control part 170 can generate a local tone mapping curve using the calculated local APL.

The control part 170 can generate a blended tone mapping curve (blended curve) by calculating the map gain and local tone mapping curve of the merged map generated based on the object recognition model.

Map gain can range from 1 to 2.

The control part 170 can generate a blended tone mapping curve (blended curve) by multiplying the map gain and the local tone mapping curve.

The control part 170 can map input HDR image data to output image data according to the generated blended tone mapping curve. The control part 170 can output an output image reflecting the mapping result on the display part 180.

According to an embodiment of the present disclosure, tone mapping can be performed on a region of interest of a viewer for an HDR image to improve the image quality of the region of interest.

Accordingly, the sense of presence and three-dimensionality of HDR images can be maximized, greatly improving the competitiveness of image quality.

The above description is merely an example of the technical idea of the present disclosure, and those skilled in the art to which the present disclosure pertains may make various modifications and variations without departing from the essential characteristics of the present disclosure.

Accordingly, the disclosed embodiments are intended to illustrate rather than limit the technical idea of the present disclosure, and the scope of the technical idea of the present disclosure is not limited by these embodiments.

The scope of protection of the present disclosure should be interpreted by the claims below, and all technical ideas within a scope equivalent thereto should be interpreted as being included in the scope of the rights of the present disclosure.

## Claims

1. A display device comprising:
a display part; and
a control part which extracts a region of interest and a detail map from the entire region of an input image, extracts one or more sub-maps from the extracted region of interest, merges the detail map and the one or more sub-maps to generate a merged map, generates a blended curve based on a local mapping curve generated based on map gain of the generated merged map and local region information of each of a plurality of local regions constituting the entire region, performs tone mapping of the input image based on the generated blended curve, and displays an output image on which the tone mapping is performed on the display part.

2. The display device of claim 1,
wherein the control part generates the blended curve by multiplying the map gain and the local mapping curve.

3. The display device of claim 2,
wherein the map gain has a range of 1 to 2.

4. The display device of claim 1, further comprising:
a storage part that stores an object recognition model based on an artificial neural network that is learned through deep learning and recognizes an object included in the region of interest.

5. The display device of claim 4,
wherein, if the recognized object represents a person, the one or more sub-maps include a head map corresponding to the head of the person, a body map corresponding to the body of the person, and
wherein the control part generates the merged map using the head map, the body map, and the detail map, and the detail map is generated based on pixel information of the entire region of the input image, and
wherein each of the head map, the body map, and the detail map includes at least one of APL information and sharpness information of the corresponding region.

6. The display device of claim 1,
wherein the control part generates the local curve for each local region from the base mapping curve for tone mapping for the entire region of the input image based on the local region information.

7. The display device of claim 6,
wherein the local mapping curve is generated by additionally adjusting a contrast curve in which the information for each local region is reflected for each local region to the base mapping curve.

8. The display device of claim 1,
wherein the control part measures the first luminance for the region of interest if tone mapping is performed by applying the blended curve to the region of interest, and measures the second luminance for the region of interest if tone mapping is performed by applying only the local mapping curve to the region of interest, and
wherein the first and second luminances are different from each other.

9. A method for operating a display device, comprising:
a step of extracting a region of interest and a detail map from an entire region of an input image;
a step of extracting one or more sub-maps from the extracted region of interest;
a step of generating a merged map by merging the detail map and the one or more sub-maps;
a step of generating a blended curve based on a local mapping curve generated based on map gain of the generated merged map and local region information of each of a plurality of local regions constituting the entire region; and
a step of performing tone mapping of the input image based on the generated blended curve.

10. The method for operating a display device of claim 9,
wherein the step of generating the blended curve includes
a step of generating the blended curve by multiplying the map gain and the local mapping curve.

11. The method for operating a display device of claim 10,
wherein the map gain has a range of 1 to 2.

12. The method for operating a display device of claim 8, further comprising:
a step of recognizing an object included in the region of interest using an object recognition model based on an artificial neural network learned through deep learning.

13. The method for operating a display device of claim 12,
wherein if the recognized object represents a person, the one or more sub-maps include a head map corresponding to the head of the person, a body map corresponding to the body of the person,
wherein the step of generating the merged map includes:
a step of generating the merged map using the head map, the body map,
wherein the detail map, and the detail map is generated based on pixel information of the entire region of the input image, and
wherein each of the head map, the body map, and the detail map includes at least one of APL information and sharpness information of the corresponding region.

14. The method for operating a display device of claim 8, further comprising:
a step of generating a local curve for each local region from a base mapping curve for tone mapping for the entire region of the input image based on the local region information.

15. The method for operating a display device of claim 14,
wherein the local mapping curve is generated by additionally adjusting the contrast curve reflecting the corresponding local region information for each local region to the base mapping curve.
